# EUROPEAN PATENT APPLICATION

(11) **EP 1 216 857 A2**
(43) Date of publication of application: **26.06.2002**
(21) Application number: 01610126.3
(22) Date of filing: 11.12.2001
(51) Int. Cl.: B60D 1/60

(54) **A cover for a trailer coupling**

(30) Priority: 19.12.2000 DK 200001904
(71) Applicant: Kjaersgaard, Gert, 8830 Tjele (DK)
(72) Inventor: Kjaersgaard, Gert, 8830 Tjele (DK); Daugaard, Jörgen, 8270 Höjbjerg (DK)
(74) Representative: Boesen, Johnny Peder

(57) **Abstract**

A hook cover for a trailer towing hook (A) of the spherical type that is used for the coupling of a towed vehicle, trailer, camper and the like to a vehicle, and comprising a first part (1), which part is flexible and has an opening, which opening is smaller than the spherical diameter of the towing hook, such that the part can be shifted down over the spherical portion of the towing hook; and at least one second part (2), which part features a cavity that allows the part to cover the spherical portion of the towing hook; and wherein the parts are, at their peripheries, interconnected by means of a hinge (3) and provided with locking (4) means for keeping the parts together in mutual abutment. It is the object of the invention to provide a hook cover that is mounted on the towing hook without necessitating the use of tools and that is provided with anti-theft measures and that improves the encapsulation and makes it more tight to enhance its protection of the towing hook.

## Description

A hook cover for a trailer-towing hook of the spherical type that is used for the coupling of a towed vehicle, trailer, camper and the like to a vehicle.

A variety of different embodiments of hook covers are already known. Including US5037122, W09116211 and DE19536911 that all feature a substantially cylindrical cap that is pressed down over the towing hook for protection thereof when not in use. Such embodiments are associated with several drawbacks, including that they are not tight from below and up underneath the cap. This means that the towing hook is not properly protected. Besides they must be put away when not in use. Thereby they are easily lost, since there is a propensity to forgetting where they were put. Besides, the caps will be soiled and therefore care must be taken that they do not soil the place of storage.

Also, caps of the same type as mentioned above are known that use a string to be permanently connected to the towing hook. In that case the cap is not lost, but the problem still remains that the cap does not protect the towing hook from below.

Also a cap type is known that features a lower portion that is screwed in place by means of screws and tools underneath the spherical portion of the towing hook and that has an upper portion consisting of two parts that are situated symmetrically around the towing hook, and wherein each part is hinged onto the lower part. When the towing hook is not in use the two parts are pushed towards each other and the spherical part of the towing hook is enclosed. This type of cap is associated with several drawbacks, including that a tool must be used to mount it. Besides it yields very poor protection of the towing hook due to it leaking at the abutment face of the two parts towards each other, which means that it does not properly accomplish its object. Additionally the two parts cannot be turned far enough away from the towing hook which means that the towed vehicle or the like that is hitched to the towing hook does not have completely free access, but will - in case of large deflections - hit the cap.

A trailer-towing hook that is used for the coupling of eg a trailer or a camper must, when not in use, be protected to the widest extent possible. This is so for several reasons, including that the towing hook must maintain an even, smooth and greased surface to enable it to function optimally as an antifriction ball bearing. The towing hook being, due to its logical position at the rear of the vehicle, highly exposed to wind and weather - including especially rain and, during the winter, salt mist from road salt, adequate encapsulation of the towing hook when not in use is a must, as is often the case most of the time. For the sake of the users and optionally passers-by the cover must also be located such that soiling with dirt or grease of clothes or other objects is avoided.

It is the object of the invention to provide a hook cover that is mounted on the towing hook without necessitating the use of a tool. It is a further object that the hook cover must be provided with anti-theft measures. It is yet another object to improve the encapsulation and make it more tight to enhance its protection of the towing hook. It is an additional object to ensure that the hook cover is always in its place and is not lost or must be taken into the vehicle with an ensuing risk of soiling the latter.

The invention distinguishes itself from the prior art in that the hook cover comprises a first part, which part has an opening, which opening is smaller than the spherical diameter of the towing hook, and which is flexible such that the part can be shifted down over the spherical portion of the towing hook; and at least one second part, which part features a cavity that allows the part to cover the spherical portion of the towing hook; and wherein the parts are, at their peripheries, interconnected by means of a hinge and provided with locking means for keeping the parts together in mutual abutment.

Hereby it is accomplished that the hook cover encloses the towing hook completely as it is also covered from below, and that the closure between the first first and the second part become tight, the parts being kept together in mutual abutment. It is further obtained that the hook cover can be mounted permanently without use of tools. It is also obtained that the first part of the hook cover will, to a certain extent, be able to adapt to variations in size of both the spherical portion of the towing hook and on the section immediately underneath the spherical portion.

The opening in the first part being provided with at least one securing means brings about the effect that, following mounting on the towing hook, the part cannot be dismounted without damaging the securing means, which means that the hook cover is ensured against theft.

The securing means comprising at least one barb means that a particularly advantageous embodiment is obtained, the barb allowing passage only in the one direction and not the in the opposite direction.

The locking means for keeping the parts together in mutual abutment comprising an overfall and an edge means that the parts are reliably and effectively kept in abutment on each other, despite of the additional fact that they are exposed to powerful aerodynamic stresses and vibrations from the vehicle.

The hinge being, according to a particularly advantageous embodiment, of the band type enables that both parts, including the band hinge, can be cast integrally, which is particularly economically advantageous.

The hinge comprising, in an alternative embodiment, a cylindrical pin increases the robustness of the hinge and thus its tolerance to harsh treatment. This may be the case eg in case of vehicles for commercial use as opposed to vehicles for private use, where the handling can be expected to be more careful.

The locking means for keeping the parts in mutual abutment against each other being a friction joint means that the joint between the parts become very tight and thus effectively protects the towing hook.

The friction joint being realised in that the one part features a skirt that overlaps the second part enables easy assembly of the parts, eg by the skirt having at its outer portion a catch, eg in that it is conical.

The part being provided with an embossing imparts, locally - by the embossing, an increased rigidity and strength to the part, or enables more easy seizure around the part with one's hand, since the embossing may comprise protrusions that increase the friction.

The hook cover being manufactured from a polymer material allows the hook cover to tolerate the wide temperature range to which it is exposed and which is due to the conditions of use spanning all the way from high temperatures by being exposed to the sun during the summer to being exposed to hard frost during the winter.

The polymer material being polyamide means that said temperature range becomes particular wide, and that a name or a logo can be embossed on the hook cover.

The embossing being integral with the part means that it is unnecessary to add further material for accomplishing the embossing, which means that cost savings are obtained and that the manufacturing process is facilitated.

The embossing being, in a preferred embodiment, accomplished by applying paint, lacquer or dapper pressure means that this treatment can be realised in a later process. Thereby it is possible to manufacture a large number of hook covers that are then provided with exactly the desired subsequent treatment in correspondence with the exact demand for the relevant configuration.

By providing the part with at least one rib means it is accomplished that the part is easily deformed and thus adjusted to the size of the spherical part of the hook that can vary within a given tolerance range. Thereby the same hook cover can be used for the products of several manufacturers without an ensuing need for adapting the size during its manufacture.

### List of Figures

The figures show examples of preferred embodiments.
Figure 1 shows the hook cover in a closed position, seen in a cross-sectional view mounted on a towing hook;
Figure 2 shows the same as Figure 1, the hook cover being, however, in open position;
Figure 3 shows the hook cover, seen from above in open position;
Figure 4 shows an alternative embodiment of the locking means for securing the parts in mutual abutment;
Figure 5 shows an alternative embodiment of the hinge;
Figures 6 shows the same as Figure 5, only disassembled.

### Description of the drawings

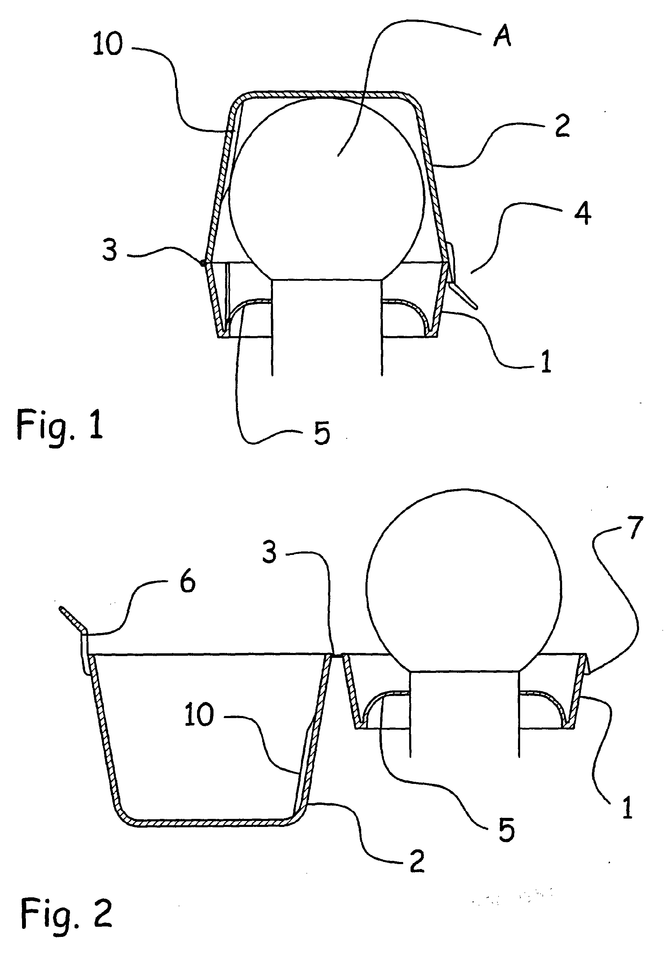

Figure 1 shows the hook cover mounted on the towing hook A. The first part 1 is shifted downwards over the spherical portion of the towing hook, which is enabled by the opening in the part 1 being flexible and adapting to the straight section on the towing hook that is found immediately underneath the spherical part. Hereby it is obtained that the spherical part is essentially covered from below, and that the first part 1 is in abutment on and supports against the towing hook. The part 2 is connected to the part 1 by means of the hinge 3. The parts 1 and 2 are kept in mutual abutment by the locking means 4. The opening in part 1 is, in the example shown, provided by means of a securing means 5 in the form of a number of separate barbs. In the preferred embodiments barbs are configured to be soft in case of deformation in the one direction and harder in case of deformation in the opposite direction, whereby it is obtained that the hook cover cannot be dismounted without damaging the securing means. This serves as an anti-theft measure for the hook cover. Also, Figure 1 shows a rib 10 that abuts on the spherical portion of the towing hook.
Figure 2 shows the hook cover in open position. In the figure, an exemplary embodiment of the locking means 4 for securing the parts in abutment on each other is shown in the form of an overfall 6 and an edge 7. The overfall 6 is configured such that it is stretched when it is pressed down over the edge 7 and snaps into locked position, when the part 2 is compressed completely against the part 1.

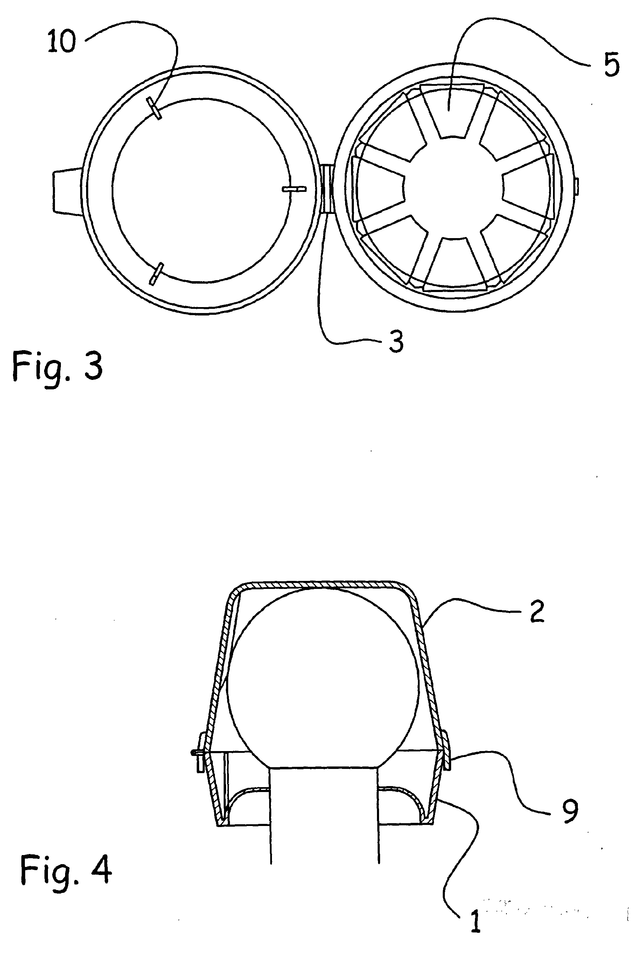

Figure 3 shows a preferred embodiment with three ribs 10 that provide a particularly adequate abutment on the spherical part of the towing hook, irrespective of minor variations in the diameter thereof. Also shown is an example of securing means 5 in the form of a number of flexible barbs.
Figure 4 shows an alternative embodiment of the locking means 4 for securing the parts 1 and 2 in abutment on each other in the form of a skirt 9 on part 2. The skirt has interior dimensions that are slightly smaller than the exterior dimensions of part 1, whereby the skirt can be pressed down over part 1 and be tensioned and whereby an efficient friction joint is obtained between the parts 1 and 2.

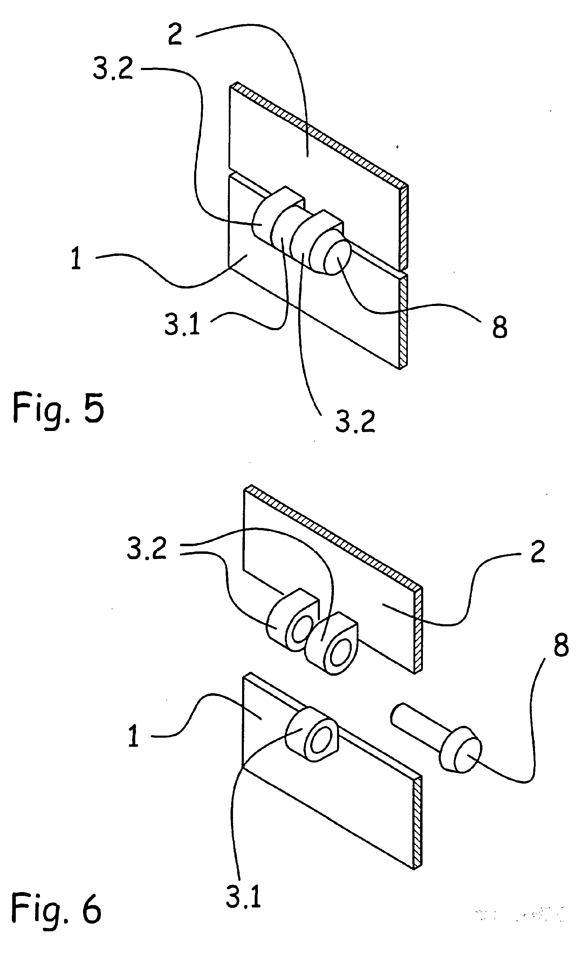

Now, Figure 5 shows an alternative embodiment of the hinge 3 that comprises a part 3.1 that is located on part 1 and two parts 3.2 that are located on part 2. Additionally a cylinder pin 8 is shown that is used to assemble the parts and that constitutes a bearing about which they are able to turn. The hinge is shown separated in Figure 6.

In the preferred embodiment the hook cover is cast in a polymeric plastics material, but of course it can also be manufactured from other materials, such as aluminium or stainless steel, and it can be manufactured in other processes than casting as such.

The hook cover can advantageously be applied with a colour from a selection of colours and with embossing or printing of names or logos corresponding to different brands of vehicles in order to thereby appeal to specific consumer segments.

In order to make the cover complete from below and upwards underneath the lower part, it can be filled eg with grease above the securing means. The grease can be for instance of the same type that is used for greasing the spherical portion of the towing hook. It is a further option to press a rubber ring down over the spherical portion of the towing hook that will then close off the openings that may still remain downwardly of the hook cover.

In the figures, parts 1 and 2 are shown as being essentially cylindrical or conical, but of course they can also be angled, oval, or in the shape of a figure, a Santa figure or some other being that may have some sculptural or symbolical significance or other, etc, in accordance with consumer desires and design.

## Claims

1. A hook cover for a trailer towing hook (A) of the spherical type that is used for the coupling of a towed vehicle, trailer, camper and the like to a vehicle, **characterised in that** the hook cover comprises a first part (1), which part is flexible and has an opening, which opening is smaller than the spherical diameter of the towing hook, such that the part (1) can be shifted down over the spherical portion of the towing hook; and at least one second part (2), which part features a cavity that allows the part to cover the spherical portion of the towing hook; and wherein the parts are, at their peripheries, interconnected by means of a hinge (3) and provided with locking (4) means for keeping the parts together in mutual abutment.

2. A hook cover according to claim 1, **characterised in that** the opening in the first part is provided with at least one securing means (5), whereby, following mounting on the towing hook, the part cannot be dismounted without damaging the securing means.

3. A hook cover according to claim 2, **characterised in that** the securing means (5) comprises at least one barb.

4. A hook cover according to claims 1-3, **characterised in that** the locking means for keeping the parts in mutual abutment on each other comprise an overfall (6) and an edge (7).

5. A hook cover according to one of claims 1-4, **characterised in that** the hinge is of the band type.

6. A hook cover according to one of claims 1-5, **characterised in that** the hinge comprises a cylindrical pin (8).

7. A hook cover according to one of claims 1-6, **characterised in that** the locking means for keeping the parts together in mutual abutment is a friction joint.

8. A hook cover according to one of claims 1-7, **characterised in that** the friction joint is configured by the part (2) having a skirt (9) that overlaps the part (1).

9. A hook cover according to one of claims 1-8, **characterised in that** the part (2) is provided with an embossing.

10. A hook cover according to one of claims 1-9, **characterised in that** the hook cover is manufactured from a polymer material.

11. A hook cover according to claim 10, **characterised in that** the polymer material is polyamide.

12. A hook cover according to claim 9, **characterised in that** the embossing is integral with the part (2).

13. A hook cover according to claim 9, **characterised in that** colour is applied to the embossing by application of paint, lacquer or dapper pressure.

14. A hook cover according to any one of claims 1-13, **characterised in that** the part (2) is provided with at least one rib (10).
